# EUROPÄISCHE PATENTSCHRIFT

(11) **EP 0 950 481 B1**
(45) Veröffentlichungstag und Bekanntmachung des Hinweises auf die Patenterteilung: **21.05.2003**
(21) Anmeldenummer: 99106582.2
(22) Anmeldetag: 31.03.1999
(51) Int. Cl.: B26D 7/18, B26F 3/06, B21D 28/10

(54) **Verfahren und Vorrichtung zum Lösen von freigesetzten Konturteilen aus Blechtafeln**
Method and apparatus for removing precut parts out of metallic sheets
Procédé et appareil pour enlever des parties précoupées dans des feuilles métalliques

(30) Priorität: 04.04.1998 DE 19815238
(43) Veröffentlichungstag der Anmeldung: 20.10.1999
(73) Patentinhaber: Cosytronic Computer-System-Electronic GmbH, 57537 Wissen (DE)
(72) Erfinder: Heinz, Heribert, 57537 Wissen (DE)
(74) Vertreter: Grommes, Karl F., Dr.

(56) Entgegenhaltungen:
- DE-A- 3 204 032
- US-A- 5 445 001

## Beschreibung

### Technisches Gebiet

Die Erfindung betrifft ein Verfahren zum Lösen von freigesetzten Konturteilen aus Blechtafeln, wobei die Konturteile über Mikrostege bzw. Mikroecken miteinander und mit der nach Freisetzen der Konturteile verbleibenden Rahmenstruktur der Blechtafeln verbunden sind, eine Vorrichtung zur Durchführung dieses Verfahrens und eine für die Durchführung dieses Verfahrens optimal ausgelegte Blechtafel.

### Stand der Technik

Die in Rede stehenden Blechtafeln mit freigesetzten Konturteilen stellen ein Zwischenprodukt bei der Herstellung von Konturteilen dar, das jeweils aus einer massiven Blechtafel durch geeignete Prozeßschritte gewonnen wird, beispielsweise durch Nibbeln, Stanzen oder Ausbrennen mittels Laser. Dieser Prozeß dauert pro Konturteil nur wenige Sekunden und erbringt die einleitend genannte Blechtafelstruktur mit Konturteilen, welche über winzige stehengebliebene Blechtafelbestandteile miteinander sowie mit der verbleibenden Rahmenstruktur der Blechtafel verbunden sind. Das Ablösen der derart freigesetzten und ausschließlich über Mikrostege bzw. -ecken mit der Rahmenstruktur verbundenen Konturteile nimmt bislang erhebliche Zeit in Anspruch. Beispielsweise müssen bisher die Konturteile manuell, d.h. durch äußere Krafteinwirkung, wie insbesondere Schütteln, Aufstoßen und dergleichen gelöst werden. Diese Handarbeit ist äußerst zeitaufwendig, anstrengend, ermüdend, lärmintensiv und gelegentlich auch nur unter Einsatz zusätzlicher Hilfsmittel, wie Zangen, Schraubenziehern, Stemmeisen und dergleichen erfolgreich.

### Darstellung der Erfindung

Angesichts dieses Standes der Technik besteht eine Aufgabe der vorliegenden Erfindung darin, ein Verfahren der eingangs genannten Art vorzuschlagen, das eine schnellere, einfachere und zuverlässigere Arbeitsweise gewährleistet und auch maschinell durchgeführt werden kann. Außerdem soll eine für dieses Verfahren geeignete Vorrichtung und eine hierfür optimierte Blechtafelstruktur geschaffen werden.

Gelöst wird diese Aufgabe hinsichtlich des Verfahrens durch die kennzeichnenden Merkmale des Anspruchs 1, hinsichtlich der Vorrichtung durch die Merkmale des Anspruchs 11 und hinsichtlich der Blechtafel durch die Merkmale des Anspruchs 15. Vorteilhafte Weiterbildungen der Erfindung sind in den Unteransprüchen angegeben.

Mit anderen Worten sieht die Erfindung das Abtrennen der Mikrostege bzw. -ecken mittels gezieltem Stromfluß vor. Vergleichbar ist das durch den Stromfluß verursachte Schmelzen bzw. Abbrennen der Mikrostege bzw. -ecken mit dem Durchbrennen des Glühfadens einer Sicherung. Insbesondere kann dieser Vorgang schlagartig, nämlich innerhalb eines Sekundenbruchteils erfolgen.

Das erfindungsgemäße Verfahren und die erfindungsgemäße Vorrichtung sehen das Anlegen der elektrischen Spannung zum Abschmelzen der Mikrostege bzw. Mikroecken über zumindest zwei Spannungspole vor. Gemäß einer bevorzugten Ausführungsform ist eine der beiden Spannungspole stationär und vorteilhafterweise mit der Rahmenstruktur der Blechtafeln, welche die freigesetzten Konturteile enthalten, verbunden, während der andere stationäre Spannungspol an einem Konturteil bzw. gleichzeitig an mehreren Konturteilen angelegt wird, um in gezielter Weise einen Stromfluß zwischen Konturteilen und der Rahmenstruktur über die Mikrostege bzw. Mikroecken hinweg zu veranlassen.

Gemäß einer alternativen Weiterbildung der Erfindung sind beide Spannungspole beweglich ausgelegt, wodurch noch gezielter als im Falle der Kombination eines beweglichen Spannungspols mit einem stationären Spannungspol Konturteile aus der Blechtafel herausgelöst werden können.

Vorteilhaft kann das Verfahren so geführt werden und kann die Vorrichtung so konzipiert sein, daß mehrere Konturteile gleichzeitig unter Strom gesetzt werden. Dadurch ist eine Taktfolge erreichbar, welche beispielsweise der Taktfolge einer Stanznibbel- oder Laseranlage entspricht, so daß im wesentlichen eine kontinuierliche Endfertigung gewährleistet werden kann.

Gestalt und Stärke der Mikrostege der Blechtafeln sind erfindungsgemäß so gewählt, daß ein Abbrennen bzw. Abschmelzen an der gewünschten Stelle, d.h. möglichst nahe an dem jeweiligen Konturteil erfolgt, wodurch der Nachbearbeitungsaufwand deutlich reduziert werden kann. Bevorzugt ist der Querschnitt der Mikrostege nahe am Konturteil verjüngt, so daß dort die größte Stromdichte entsteht und ein Abbrennen erfolgt.

### Kurze Beschreibung der Zeichnungen

Nachfolgend wird die Erfindung anhand der Zeichnung beispielhaft näher erläutert; es zeigen:
- Fig. 1: eine Blechtafel mit freigesetzten Konturteilen in Draufsicht,
- Fig. 2: eine vergrößerte Detailansicht der Blechtafel von Fig. 1,
- Fig. 3: die Blechtafel von Fig. 1, an die eine schematisch dargestellte Vorrichtung zum Lösen der freigesetzten Konturteile gemäß einer ersten Ausführungsform angeschlossen ist,
- Fig.4: die Blechtafel von Fig. 1, an die eine schematisch dargestellte Vorrichtung zum Lösen der freigesetzten Konturteil gemäß einer zweiten Ausführungsform angeschlossen ist, und
- Fig.5: eine robotergesteuerte Vorrichtung zum Lösen von freigesetzten Konturteilen aus Blechtafeln auf Grundlage der Vorrichtung von Fig. 3.

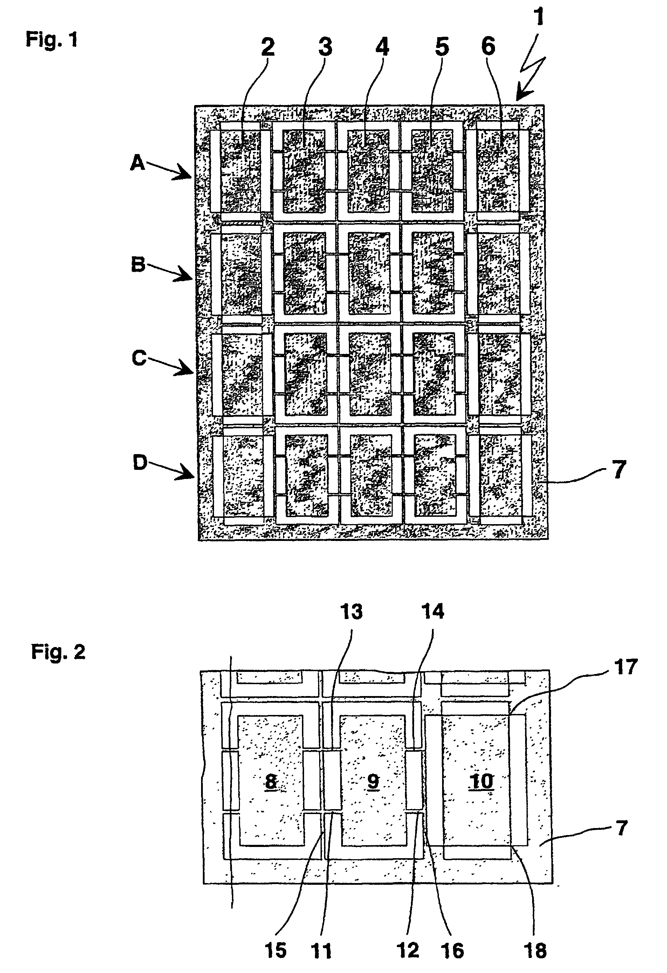

Die in Fig. 1 allgemein mit der Bezugsziffer 1 bezeichnete Blechtafel stellt ein Zwischenprodukt bei der Herstellung von Konturteilen dar. Dieses Zwischenprodukt geht aus einer ursprünglich rechteckigen Blechtafel dadurch hervor, daß in an sich bekannter Weise durch Nibbeln, Stanzen oder Ausbrennen mittels Laser, beispielsweise unter numerischer Steuerung Konturteile freigesetzt werden, die eine gewünschte Gestalt aufweisen, beispielsweise Rechteckform, wie in Fig. 1 gezeigt. In Fig. 1 sind die Konturteile matrixartig in Zeilen und Spalten angeordnet, und die einzelnen horizontalen Zeilen bzw. Reihen sind allgemein mit A, B, C und D bezeichnet. Jede Konturreihe A bis D umfaßt fünf rechteckige Konturteile, von denen diejenigen der Konturteilreihe A mit den Bezugsziffern 2, 3, 4, 5 und 6 bezeichnet sind. Der Übersichtlichkeit wegen sind die weiteren Konturteile in den Konturteilreihen B bis D nicht im einzelnen mit Bezugsziffern versehen.

Die Konturteile sind aus der Blechtafel 1 derart freigesetzt, daß sie über eine feine Struktur von Mikrostegen bzw. Mikroecken miteinander bzw. mit einer nach dem Freisetzen verbleibenden äußeren Rahmenstruktur 7 und inneren Rahmenstruktur 15, 16 der Blechtafel 1 verbunden sind. Die Mikrostege und innere Rahmenstruktur verlaufen bei der in Fig. 1 dargestellten Struktur gitterartig, was in Fig. 2 noch im einzelnen dargestellt ist. Fig. 2 zeigt den rechten unteren Teil der Blechtafel 1 von Fig. 1 mit drei nebeneinander angeordneten Konturteilen 8, 9 und 10, die untereinander seitlich über in vertikaler Richtung voneinander beabstandete Mikrostege 11, 12, 13, 14 verbunden sind, welche ihrerseits durch eine vertikal verlaufende innere Rahmenstruktur 15, 16 miteinander verbunden sind, die sich über die volle Länge der Blechtafel erstreckt und an ihrem oberen und unteren Ende in die äußere Rahmenstruktur 7 übergeht. Das in Fig. 2 rechts außenliegende Konturteil 10 ist über zwei Mikroecken 17 und 18 mit der äußeren Rahmenstruktur 7 verbunden.

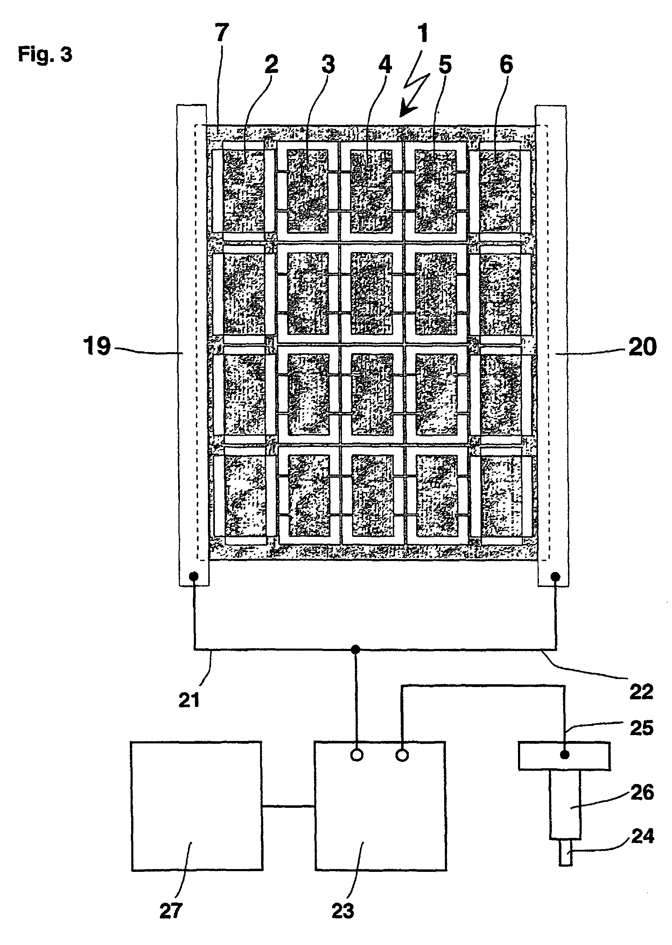

Die Mikrostege 11 bis 14 ebenso wie die Mikroecken 17, 18 verbinden bzw. vemetzen die Konturteile 8 bis 10 miteinander sowie mit der inneren und äußeren Rahmenstruktur 15, 16; 7 ausreichend stabil, um die Blechtafel 1 mit den freigesetzten Konturteilen gegebenenfalls transportieren oder an anderem Ort positionieren zu können, um dort die freigesetzten Konturteile aus der Blechtafel 1 herauszulösen. Dieser Vorgang erfolgt bislang manuell durch äußere Krafteinwirkung, insbesondere Schütteln, Aufstoßen und dergleichen. Da dies zeitaufwendig, anstrengend, ermüdend, lärmintensiv, gelegentlich auch nur unter Einsatz zusätzlicher Hilfsmittel erfolgreich ist, geht die Erfindung einen vollständig anderen Weg, wie gemäß einer ersten Ausführungsform beispielhaft in Fig. 3 darstellt.

Fig. 3 zeigt die Blechtafel 1 von Fig. 1, seitlich eingespannt in eine Spanneinrichtung mit Festspannelementen 19, 20, die identisch ausgebildet und Teil einer nicht dargestellten Stützstruktur sind. Die Festspannelemente 19, 20 kontaktieren die äußere Rahmenstruktur 7 der Blechtafel 1 und bestehen aus elektrisch leitendem Material zumindest im Kontaktbereich mit der äußeren Rahmenstruktur 7. Über Leitungen 21, 22 sind die unteren Enden der Festspannelemente 19, 20 (im elektrisch leitenden Bereich) mit einer vorzugsweise stationären Strom- bzw. Spannungsquelle 23 verbunden. Außerdem ist an die Stromquelle 23 ein beweglicher Spannungspol 24 über eine Leitung 25 angeschlossen. Der bewegliche Spannungspol 24 bildet Teil einer manuell handhabbaren Spannungsanlegeeinrichtung, die außerdem einen Isolationskörper 26 umfaßt. Die beiden elektrisch leitfähigen Festspannelemente 19, 20 bilden in dieser Anordnung einen stationären Spannungspol.

Wird der bewegliche Spannungspol 24 auf einem der freigesetzten Konturteile, beispielsweise dem Konturteil 2 in der linken oberen Ecke der Blechtafel 1 positioniert und die Stromquelle 23 aktiviert, fließt vom beweglichen Spannungspol 24 über das Konturteil 2, über dessen Mikroecken und den angrenzenden Teil der äußeren und inneren Rahmenstruktur 7; 15, 16 ein Strom in die Festspannelemente 19 und 20 und über die Leitungen 21 und 22 zurück zur Stromquelle 23. Aufgrund dieses Stromflusses, wobei die Stromhöhe, wie nachfolgend erläutert, in geeigneter Weise eingestellt wird, schmelzen die genannten Mikroecken bzw. brennen durch, wobei dieses Schmelzen bzw. Durchbrennen schlagartig, innerhalb eines Bruchteils einer Sekunde erfolgt. Das gewährleistet eine problemlose Lösung des Konturteils 2 aus der Blechtafel 1. Das herausgelöste Konturteil 2 kann in einem nicht dargestellten Sammelbehälter aufgefangen werden. Alternativ kann die bewegliche Spannungsanlegeeinrichtung mit dem Spannungspol 24 eine Saugeinrichtung aufweisen, durch die gewährleistet ist, daß das abgelöste Konturteil 2 an dieser Einrichtung haften bleibt. Eine Alternative zu der Saugeinrichtung stellt eine Greifeinrichtung dar.

Die in Fig. 3 beispielhaft gemäß einer Ausführungsform gezeigte Ablösevorrichtung umfaßt außerdem eine Steuereinrichtung 27 zur Steuerung des Stromflusses der Stromquelle 23. Das heißt, entsprechend der Form und Gestalt der herauszulösenden Konturteile und entsprechend der Form und Gestalt der die Konturteile miteinander und mit der Rahmenstruktur verbindenden Mikrostege bzw. Mikroecken wird die Stärke und Dauer des Stromflusses ausgehend von der Stromquelle 23 durch die Steuereinrichtung 27 so gesteuert, daß die gewünschte saubere Herauslösung der Konturteile erzielt wird, ohne daß deren Ecken, die in Verbindung mit den Mikroecken stehen, durch den Abschmelz- bzw. Abbrennvorgang praktisch beeinträchtigt werden und eine Nachbearbeitung erfordern oder gar Ausschuß darstellen.

Alternativ zu der vorstehend erläuterten einzelnen Herauslösung der Konturteile kann der bewegliche Spannungspol 24 statt im wesentlichen punktförmig auch stegförmig ausgebildet sein, um gleichzeitig mehrere herauszulösende Konturteile zu kontaktieren. Dadurch kann beispielsweise ein sequentielles reihen- bzw. zeilenweises Herauslösen der Konturteile in Spaltenrichtung, bezogen auf die Blechtafel 1, vorgenommen werden.

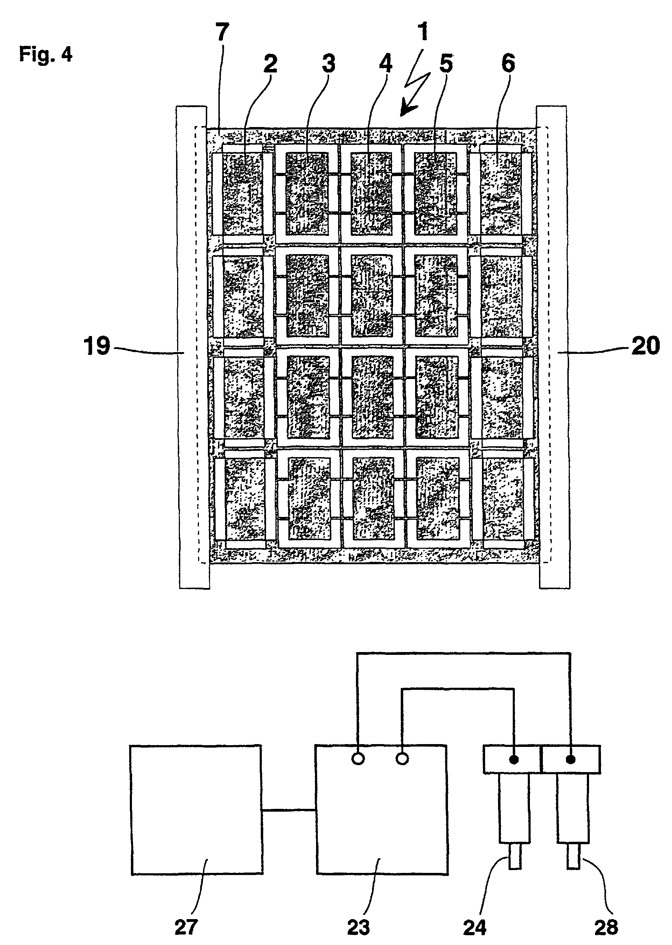

Fig. 4 zeigt eine abgewandelte Ausführungsform der Vorrichtung von Fig. 3. Im Unterschied zu der Vorrichtung von Fig. 3 weist diejenige von Fig. 4. die im übrigen mit denselben Bezugsziffern wie in Fig. 3 bezeichnet ist, anstelle des stationären Spannungspols in Gestalt der Festspannelemente 19, 20 einen zweiten beweglichen Spannungspol 28 auf. Mit Hilfe der beiden beweglichen Spannungspole 24 und 28, die beispielsweise identisch aufgebaut sein können, wie in Fig. 4 schematisch angedeutet, können gezielt die Stromaufgabestellen festgelegt werden. Beispielsweise kann eine Stromaufgabestelle auf dem Konturteil 2 und die andere auf der äußeren Rahmenstruktur 7 gewählt werden, so daß bei Stromfluß über die vemetzenden Mikrostege das Konturteil 2 aus seiner Rahmenstruktur herausgelöst wird.

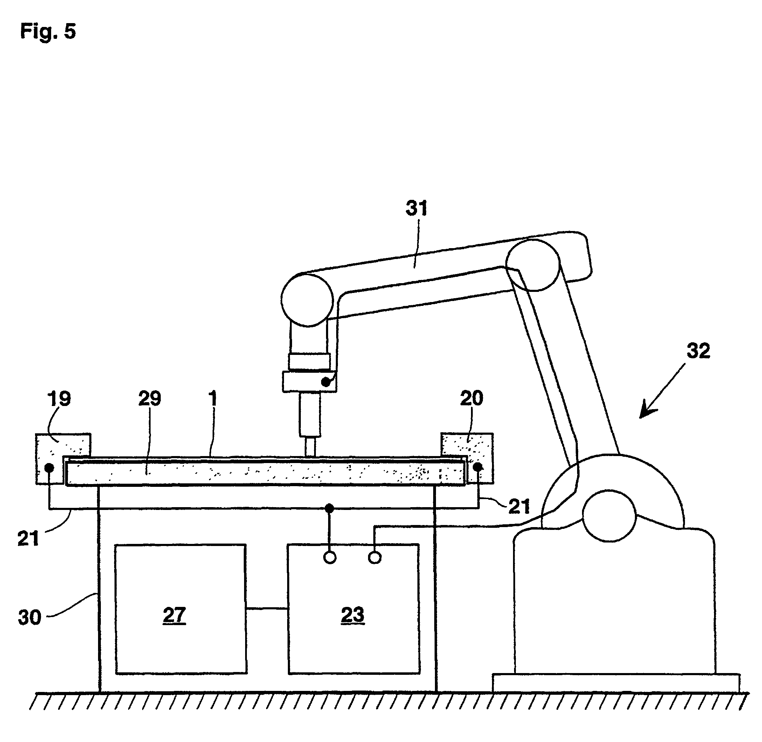

Eine weitere alternative Ausführungsform der erfindungsgemäßen Vorrichtung ist in Fig. 5 gezeigt. Diese Vorrichtung entspricht bis auf die automatisierte Führung des beweglichen Spannungspols 24 derjenigen von Fig. 3, wobei die Stützstruktur für die Blechtafel 1 in Gestalt einer Isolierplatte 29 bzw. Unterlage für die Blechtafel 1 und als Teil einer tragenden Tischstruktur 30 dargestellt ist. In letzterer sind die Stromquelle 23 und die Steuereinrichtung 27 enthalten. Der bewegliche Spannungspol 24 ist bei dieser Ausführungsform der erfindungsgemäßen Vorrichtung an den mehrgelenkigen Arm 31 eines Industrieroboters 32 angeschlossen. Im übrigen ist der Spannungspol 24 bzw. die ihn tragende Struktur so aufgebaut, wie in Fig. 3 gezeigt.

Durch die Vorrichtung von Fig. 5 kann, beispielsweise unter Zuhilfenahme eines numerischen Rechners, das Lösen der freigesetzten Konturteile aus der Blechtafel 1 vollautomatisch in gewünschter Abfolge erfolgen.

### Bezugszeichenliste

- 1: Blechtafel
- 2: Konturteil
- 3: Konturteil
- 4: Konturteil
- 5: Konturteil
- 6: Konturteil
- 7: Rahmenstruktur, äußere
- 8: Konturteil
- 9: Konturteil
- 10: Konturteil
- 11: Mikrosteg
- 12: Mikrosteg
- 13: Mikrosteg
- 14: Mikrosteg
- 15: Rahmenstruktur, innere
- 16: Rahmenstruktur, innere
- 17: Mikroecke
- 18: Mikroecke
- 19: Festspannelement,
Spanneinrichtung,
Spannungspol
- 20: Festspannelement
Spanneinrichtung,
Spannungspol
- 21: Leitung
- 22: Leitung
- 23: Stromquelle,
Spannungsquelle
- 24: Spannungspol, beweglich
- 25: Leitung
- 26: Isolationskörper
- 27: Steuereinrichtung
- 28: Spannungspol, beweglich
- 29: Isolierplatte
- 30: Tischstruktur
- 31: Arm
- 32: (Industrie-) Roboter

- A: Konturteilreihe
- B: Konturteilreihe
- C: Konturteilreihe
- D: Konturteilreihe

## Patentansprüche

1. Verfahren zum Lösen von freigesetzten Konturteilen (2 bis 6, 8, 9, 10) aus Blechtafeln (1), wobei die Konturteile (2 bis 6, 8, 9, 10) über Mikrostege (11 bis 14) bzw. Mikroecken (17, 18) miteinander und mit der nach Freisetzen der Konturteile (2 bis 6, 8, 9, 10) verbleibenden Rahmenstruktur (7; 15, 16) der Blechtafeln (1) verbunden sind, **dadurch gekennzeichnet, daß** die Mikrostege bzw. Mikroecken (11 bis 14; 17, 18) durch Anlegen elektrischer Spannung zwischen einem Konturteil bzw. Konturteilen (2 bis 6, 8, 9, 10) und der Rahmenstruktur (7; 15, 16) und Erzeugen eines Stromflusses durch die Mikrostege bzw. Mikroecken (11 bis 14; 17, 18) abgebrannt bzw. abgeschmolzen werden.

2. Verfahren nach Anspruch 1, **dadurch gekennzeichnet, daß** die elektrische Spannung über zumindest zwei Spannungspole (19, 20, 24, 28) angelegt wird.

3. Verfahren nach Anspruch 2, **dadurch gekennzeichnet, daß** beide Spannungspole (24, 28) beweglich sind.

4. Verfahren nach Anspruch 2, **dadurch gekennzeichnet, daß** einer (19, 20) der beiden Spannungspole (19, 20, 24) stationär ist.

5. Verfahren nach Anspruch 4, **dadurch gekennzeichnet, daß** der stationäre Spannungspol (19, 20) an die Rahmenstruktur (7) angelegt wird, und daß der bewegliche Spannungspol (24) nacheinander an einzelne Konturteile (2 bis 6, 8, 9, 10) angelegt wird.

6. Verfahren nach Anspruch 4, **dadurch gekennzeichnet, daß** der stationäre Spannungspol (19, 20) an die Rahmenstruktur (7) angelegt wird, und daß der bewegliche Spannungspol (24) nacheinander an mehrere Konturteile (2 bis 6, 8, 9, 10) gleichzeitig angelegt wird.

7. Verfahren nach Anspruch 4, 5 oder 6, **dadurch gekennzeichnet, daß** die Konturteile (2 bis 6, 8, 9, 10) sequentiell reihenweise durch den beweglichen Spannungspol (24) kontaktiert werden.

8. Verfahren nach einem der Ansprüche 1 bis 7, **dadurch gekennzeichnet, daß** der Strom, der über Spannungspole (19, 20, 24, 28) in die Konturteile (2 bis 6, 8, 9, 10) eingeleitet wird, abhängig von der Anzahl und/oder Form kontaktierter Konturteile bzw. abhängig von der Anzahl und/oder Form der Mikrostege (11 bis 14) bzw. Mikroecken (17, 18) eingestellt wird.

9. Verfahren nach einem der Ansprüche 1 bis 8, **dadurch gekennzeichnet, daß** der bewegliche Spannungspol (24) bzw. die beweglichen Spannungspole (24, 28) manuell positioniert wird bzw. werden.

10. Verfahren nach einem der Ansprüche 1 bis 8, **dadurch gekennzeichnet, daß** der bewegliche Spannungspol (24) bzw. die beweglichen Spannungspole (24, 28) maschinell bzw. robotergesteuert positioniert wird bzw. werden.

11. Vorrichtung zur Durchführung des Verfahrens nach einem der Ansprüche 1 bis 10, **gekennzeichnet durch** eine isolierende Unterlage und eine Spanneinrichtung (19, 20) zum Spannen der Rahmenstruktur (7) auf die isolierende Unterlage, wobei die Spanneinrichtung (19, 20) als stationärer elektrischer Spannungspol ausgelegt und ein weiterer beweglicher Spannungspol im Anschluß an eine gemeinsame Stromquelle (23) vorgesehen sind.

12. Vorrichtung nach Anspruch 11, **dadurch gekennzeichnet, daß** der bewegliche Spannungspol (24) vom Arm (31) eines Roboters (32) getragen ist.

13. Vorrichtung nach Anspruch 11 oder 12, **dadurch gekennzeichnet, daß** der bewegliche Spannungspol (24) integral mit einer Auffang/Handhabungseinrichtung für das bzw. die aus der Rahmenstruktur herausgelöste(n) Konturteil(e) ausgebildet ist

14. Vorrichtung nach Anspruch 13, **dadurch gekennzeichnet, daß** die Auffang-/Handhabungseinrichtung eine Greif- und/oder eine Saugeinrichtung aufweist.

15. Blechtafel mit freigesetzten Konturteilen (2 bis 6, 8, 9, 10), die über Mikrostege (11 bis 14) miteinander und mit der durch Freisetzen der Konturteile (2 bis 6, 8, 9, 10) verbleibenden äußeren und inneren Rahmenstruktur (7; 15, 16) verbunden sind, zur Durchführung des Verfahrens nach einem der Ansprüche 1 bis 9, bevorzugt mit der Vorrichtung nach einem der Ansprüche 10 bis 14, **dadurch gekennzeichnet, daß** der Querschnitt der Mikrostege (11 bis 14) nahe am jeweiligen Konturteil (2 bis 6, 8, 9, 10) verjüngt ist.

## Claims

1. Method for detaching released contour parts (2 to 6, 8, 9, 10) from sheet-metal panels (1), wherein the contour parts (2 to 6, 8, 9, 10) are connected to each other, and to the frame structure (7; 15, 16) of the sheet-metal panels (1) remaining after release of the contour parts (2 to 6, 8, 9, 10), by microwebs (11 to 14) and/or microcorners (17, 18), **characterized in that** the microwebs and/or microcomers (11 to 14; 17, 18) are burned and/or melted away by applying an electrical voltage between a contour part or contour parts (2 to 6, 8, 9, 10) and the frame structure (7; 15, 16) and generating a current flow through the microwebs and/or microcomers (11 to 14; 17, 18).

2. Method according to Claim 1, **characterized in that** the electrical voltage is applied through at least two voltage poles (19, 20, 24, 28).

3. Method according to Claim 2, **characterized in that** both voltage poles (24, 28) are mobile.

4. Method according to Claim 2, **characterized in that** one (19, 20) of the two voltage poles (19, 20, 24) is fixed.

5. Method according to Claim 4, **characterized in that** the fixed voltage pole (19, 20) is applied to the frame structure (7), and **in that** the mobile voltage pole (24) is successively applied to single contour parts (2 to 6, 8, 9, 10).

6. Method according to Claim 4, **characterized in that** the fixed voltage pole (19, 20) is applied to the frame structure (7), and **in that** the mobile voltage pole (24) is ― successively ― applied to a plurality of contour parts (2 to 6, 8, 9, 10) simultaneously.

7. Method according to Claim 4, 5 or 6, **characterized in that** the contour parts are sequentially contacted row by row by the mobile voltage pole (24).

8. Method according to any one of Claims 1 to 7, **characterized in that** the current passed through the voltage poles (19, 20, 24, 28) into the contour parts (2 to 6, 8, 9, 10) is set as a function of the number and/or shape of the contacted contour parts and/or as a function of the number and/or shape of the microwebs (11 to 14) and/or microcomers (17, 18).

9. Method according to any one of Claims 1 to 8, **characterized in that** the mobile voltage pole (24) or mobile voltage poles (24, 28) is or are positioned manually.

10. Method according to any one of Claims 1 to 8, **characterized in that** the mobile voltage pole (24) or mobile voltage poles (24, 28) is or are positioned under mechanical or robot control.

11. Apparatus for carrying out the method according to any one of Claims 1 to 10, **characterized by** an insulating bed and a damping device (19, 20) for damping the frame structure (7) to the insulating bed, the damping device (19, 20) being designed as a fixed electrical voltage pole and a further, mobile voltage pole being provided and the said fixed and mobile voltage poles being connected to a common current source (23).

12. Apparatus according to Claim 11, **characterized in that** the mobile voltage pole (24) is carried by the arm (31) of a robot (32).

13. Apparatus according to Claim 11 or 12, **characterized in that** the mobile voltage pole (24) is integrated with a pick-up/handling device for the contour part(s) detached from the frame structure.

14. Apparatus according to Claim 13, **characterized in that** the pick-up/handling device has a gripper and/or suction device.

15. Sheet-metal panels with released contour parts (2 to 6, 8, 9, 10) which are are connected to each other, and to the outer and inner frame structure (7; 15, 16) left behind by release of the contour parts (2 to 6, 8, 9, 10), for carrying out the method according to any one of Claims 1 to 9, preferably with the apparatus according to any one of Claims 10 to 14, **characterized in that** the cross-section of the microwebs (11 to 14) diminishes close to the contour part (2 to 6, 8, 9, 10) concerned.

## Revendications

1. Procédé pour enlever des pièces de contour (2 à 6, 8, 9, 10) pré-coupées dans des panneaux en tôle (1), les parties de contour (2 à 6, 8, 9, 10) étant reliées ensemble, par des micro-nervures (11 à 14) ou des micro-coins (17, 18), et reliées à la structure de cadre (7 ; 15, 16), subsistant après dégagement des parties de contour (2 à 6, 8, 9, 10) des panneaux en tôle (1), **caractérisé en ce que** des micro-nervures ou micro-coins (11 à 14 ; 17, 18) sont détruits par cuisson ou fusion, par application d'une tension électrique entre une partie de contour ou des parties de contour (2 à 6, 8, 9, 10) et la structure de cadre (7 ; 15, 16), et production d'un flux électrique passant par les micro-nervures ou micro-coins (11 à 14 ; 17, 18).

2. Procédé selon la revendication 1, **caractérisé en ce que** la tension électrique est appliquée par au moins deux pôles de tension (19, 20, 24, 28).

3. Procédé selon la revendication 2, **caractérisé en ce que** les deux pôles de tension (24, 28) sont mobiles.

4. Procédé selon la revendication 2, **caractérisé en ce que** l'un (19, 20) des deux pôles de tension (19, 20, 24) est stationnaire.

5. Procédé selon la revendication 4, **caractérisé en ce que** le pôle de tension (19, 20) stationnaire est appliqué sur la structure de cadre (7), et **en ce que** le pôle de tension (24) mobile est appliqué sur les différentes pièces de contour (2 à 6, 8, 9, 10), l'une après l'autre.

6. Procédé selon la revendication 4, **caractérisé en ce que** le pôle de tension (19, 20) stationnaire est appliqué sur la structure de cadre (7), et **en ce que** le pôle de tension (24) mobile est appliqué simultanément sur plusieurs parties de contour (2 à 6, 8, 9, 10) l'une après l'autre.

7. Procédé selon la revendication 4, 5 ou 6, **caractérisé en ce que** les parties de contour (2 à 6, 8, 9, 10) sont mises en contact séquentiellement par lignes ou rangées, au moyen du pôle de tension (24) mobile.

8. Procédé selon l'une des revendications 1 à 7, **caractérisé en ce que** le courant introduit, dans les parties de contour (2 à 6, 8, 9, 10) par les pôles de tension (19, 20, 24, 28), est réglé, en fonction du nombre et/ou de la forme des parties de contour mises en contact, respectivement en fonction du nombre et/ou de la forme des micro-nervures (11 à 14) ou des micro-coins (17, 18).

9. Procédé selon l'une des revendications 1 à 8, **caractérisé en ce que** le pôle de tension (24) mobile ou les pôles de tension (24, 28) mobiles est, respectivement sont, positionné(s) manuellement.

10. Procédé selon l'une des revendications 1 à 8, **caractérisé en ce que** le pôle de tension (24) mobile, respectivement les pôles de tension (24, 28) mobiles est, respectivement sont, positionné(s) à la machine ou sous la commande d'un robot.

11. Dispositif de mise en oeuvre du procédé selon l'une des revendications 1 à 10, **caractérisé par** une embase isolante et un dispositif de serrage ou bridge (19, 20) pour serrer la structure de cadre (7) sur l'embase isolante, le dispositif de serrage (19, 20) étant conçu sous la forme d'un pôle de tension électrique stationnaire, et un autre pôle de tension mobile étant prévu, raccordé à une source électrique (23) commune.

12. Dispositif selon la revendication 11, **caractérisé en ce que** le pôle de tension (24) mobile est porté par le bras (31) d'un robot (32).

13. Dispositif selon la revendication 11 ou 12, **caractérisé en ce que** le pôle de tension (24) mobile est réalisé d'une seule pièce, avec un dispositif de captage/manipulation pour la ou les partie(s) de contour ayant été détachée(s) de la structure de cadre.

14. Dispositif selon la revendication 13, **caractérisé en ce que** le dispositif de captage/manipulation présente un dispositif preneur et/ou à ventouse.

15. Panneau en tôle, comportant des parties de contour (2 à 6, 8, 9, 10) pré-coupées, reliées ensemble par des micro-nervures (11 à 14) et reliées à la structure de cadre extérieure et intérieure (7 ; 15, 16) restante suite au dégagement des parties de contour (2 à 6, 8, 9, 10), pour mettre en oeuvre le procédé selon l'une des revendications 1 à 9, de préférence avec le dispositif selon l'une des revendications 10 à 14, **caractérisé en ce que** la section transversale des micro-nervures (11à 14) est effilée à proximité de la partie de contour (2 à 6, 8, 9, 10) respective.
